(19) Europäisches Patentamt
European Patent Office
Office européen des brevets

(11) **EP 0 718 647 B1**

(12) **FASCICULE DE BREVET EUROPEEN**

(45) Date de publication et mention
de la délivrance du brevet:
**02.05.2002 Bulletin 2002/18**

(51) Int Cl.⁷: **G02B 6/16**

(21) Numéro de dépôt: **95402906.2**

(22) Date de dépôt: **21.12.1995**

(54) **Fibre optique monomode**

Optische Einmodenfaser

Single mode optical fiber

(84) Etats contractants désignés:
**DE DK FR GB IT NL**

(30) Priorité: **23.12.1994 FR 9415554**

(43) Date de publication de la demande:
**26.06.1996 Bulletin 1996/26**

(73) Titulaires:
• **ALCATEL**
**75008 Paris (FR)**
Etats contractants désignés:
**DE DK GB IT NL**
• **ALCATEL FIBRES OPTIQUES**
**F-95871 Bezons Cedex (FR)**
Etats contractants désignés:
**FR**

(72) Inventeurs:
• **Brehm, Claude**
**F-92120 Montrouge (FR)**
• **Boniort, Jean-Yves**
**F-91470 Limours (FR)**
• **Nouchi, Pascale**
**F-91140 Villebon S/Yvette (FR)**
• **Auge, Jacques**
**F-91530 Saint Cheron (FR)**

(74) Mandataire: **Laroche, Danièle et al**
**COMPAGNIE FINANCIERE ALCATEL**
**Département Propriété Industrielle**
**30, avenue Kléber**
**75116 Paris (FR)**

(56) Documents cités:
**EP-A- 0 260 795        US-A- 4 402 570**

• **PATENT ABSTRACTS OF JAPAN vol. 014 no. 094 (P-1010) ,21 Février 1990 & JP-A-01 302233 (NIPPON TELEGR & TELEPH CORP) 6 Décembre 1989,**
• **PATENT ABSTRACTS OF JAPAN vol. 009 no. 327 (P-415) ,21 Décembre 1985 & JP-A-60 153004 (FURUKAWA DENKI KOGYO KK) 12 Août 1985,**
• **PATENT ABSTRACTS OF JAPAN vol. 012 no. 154 (P-700) ,12 Mai 1988 & JP-A-62 269902 (CANON INC) 24 Novembre 1987,**
• **PATENT ABSTRACTS OF JAPAN vol. 009 no. 088 (C-276) ,17 Avril 1985 & JP-A-59 217653 (FURUKAWA DENKI KOGYO KK) 7 Décembre 1984,**

**Description**

La présente invention concerne une fibre optique monomode.

On rappelle qu'une fibre optique est un guide d'ondes optiques constitué d'une partie centrale, dénommée coeur optique, servant à guider la majorité des ondes lumineuses, entourée d'une partie périphérique, dénommée gaine optique. De manière générale, la gaine optique est entourée d'un revêtement de protection en un matériau synthétique (par exemple une résine) d'épaisseur voisine de 50 µm.

La longueur d'onde de transmission choisie à l'heure actuelle pour les fibres optiques est 1,3 ou 1,55 µm. En effet, c'est à ces longueurs d'onde qu'il est possible d'obtenir une atténuation minimale dans la transmission de la lumière, inférieure à 0,4 dB/km.

Ainsi, dans le cadre de la présente invention, les fibres considérées sont destinées à être utilisées à une longueur d'onde de 1,3 ou 1,55 µm, la plus efficace pour la transmission.

Par ailleurs, on sait bien que les fibres optiques monomodes ont une largeur de bande bien plus grande que les fibres multimodes, et c'est pourquoi les développements actuels et futurs dans le domaine des fibres optiques sont axés sur les fibres optiques monomodes.

En conséquence, la présente invention s'attache tout particulièrement aux fibres optiques monomodes destinées à être utilisées aux longueurs d'onde 1,3 ou 1,55 µm.

Les fibres optiques monomodes actuelles, décrites par exemple dans le Breret US 4.306.767, ont un diamètre de coeur pouvant varier de 8 à 10 µm ; le diamètre de leur gaine optique est de 125 µm, identique à celui des fibres optiques multimodes. Du fait du diamètre, relativement important, de l'ensemble constitué par le coeur et la gaine optique, le coût en silice pour réaliser la préforme à partir de laquelle est étirée une fibre optique monomode standard est élevé. Pour réduire ce coût, on a déjà pensé à réduire le diamètre du coeur jusqu'à environ 2,5 à 3 µm, tout en maintenant le diamètre de la gaine à 125 µm.

Toutefois, une telle diminution du diamètre du coeur n'entraîne pas une réduction de coût suffisante.

En outre, le diamètre de la gaine optique restant inchangé, la capacité de transmission d'un câble à fibres optiques contenant de telles fibres n'est pas accrue.

Un but de la présente invention est de réaliser une fibre optique monomode ayant un coût de fabrication inférieur à celui des fibres optiques monomodes connues.

Un autre but de la présente invention est de diminuer l'encombrement des fibres optiques monomodes afin d'augmenter la capacité des câbles à fibres optiques.

La présente invention propose à cet effet une fibre optique monomode comprenant un coeur optique pour le guidage de la majorité des ondes lumineuses, entouré d'une gaine optique, la différence entre l'indice de réfraction maximal dudit coeur et celui de ladite gaine optique étant notée $\Delta n$ et le rayon dudit coeur étant noté a, **caractérisée en ce que** :

- $a \in [0{,}6a_c \; ; \; 1{,}1a_c]$, $a_c$ étant donné, en µm, par la formule :

$$a_c = \frac{2{,}405}{k} \; x \; \frac{1}{\sqrt{2n_g \Delta n}},$$

où $k = 2\pi/\lambda$, $\lambda$ étant (en µm) la longueur d'onde de la transmission, et où $n_g$ est l'indice de ladite gaine optique, égal à $3.10^{-3}$ près à celui de la silice pure,

- $\Delta n$ est supérieur ou égal à 0,01,

et en ce que, $\varphi$ étant le diamètre de ladite gaine optique, en µm : $\varphi \in [\varphi_{min} \; ; \; 100]$, $\varphi_{min}$ étant donné, en µm, par la formule

$$\varphi_{min} = 125 \, x \left( \frac{10^{-12}}{2{,}4n_g k^2} \right)^{\!1/8} \frac{\left[ V \left( 0{,}5862 + 1{,}8364 V^{-3/2} + 3{,}7127 V^{-6} \right) \right]^{1/4}}{(1{,}1428 - 0{,}996 V^{-1}) \Delta n^{5/8}}$$

où :

$$V = \frac{2\pi a}{\lambda} \sqrt{2n_g \Delta n}.$$

En choisissant les paramètres caractéristiques de la fibre optique, c'est-à-dire a, $\Delta$n et $\varphi$, de la manière indiquée ci-dessus, il est possible de réaliser une fibre optique monomode aux longueurs d'onde de transmission voisines de 1,3 ou 1,55 $\mu$m, qui a un diamètre sur gaine réduit par rapport aux fibres de l'art antérieur, tout en présentant une atténuation et une sensibilité aux microcourbures comparables à celles des fibres standards.

On constate donc, selon l'invention, qu'il n'est pas nécessaire, pour une fibre optique monomode, d'avoir une gaine optique de diamètre de l'ordre de 125 $\mu$m. Si l'on a choisi un tel diamètre lors de la conception initiale des fibres monomodes, c'est pour avoir des fibres monomodes et multimodes ayant les mêmes dimensions (pour les fibres multimodes, qui ont un diamètre de coeur pouvant aller jusqu'à 85 $\mu$m, le diamètre de la gaine optique est voisin de 125 $\mu$m pour obtenir le guidage souhaité tout en conservant la flexibilité de la fibre).

Grâce à l'invention, on peut donc réduire, sans préjudice sur les performances de transmission, l'encombrement de la fibre optique, et par conséquent accroître la capacité des câbles à fibres optiques tout en réduisant le coût de réalisation des fibres optiques.

Le profil d'indice d'une fibre optique selon l'invention peut être choisi parmi les profils du type échelon, trapèze ou triangle, du moment que les conditions sur a, $\Delta$n et $\varphi$ selon l'invention sont respectées.

D'autres caractéristiques et avantages de la présente invention apparaîtront dans la description et les exemples suivants de fibres optiques selon l'invention, donnés à titre illustratif et nullement limitatif.

Dans les figures suivantes :

- la figure 1 est une coupe transversale d'une fibre optique selon l'invention,
- la figure 2 illustre le profil d'indice de la fibre de la figure 1,
- la figure 3 illustre un profil d'indice de type trapèze,
- la figure 4 illustre un profil d'indice de type triangle,
- la figure 5 montre $\varphi_{min}$ en fonction de $\Delta$n et a.

Dans toutes ces figures, les éléments communs portent les mêmes numéros de référence.

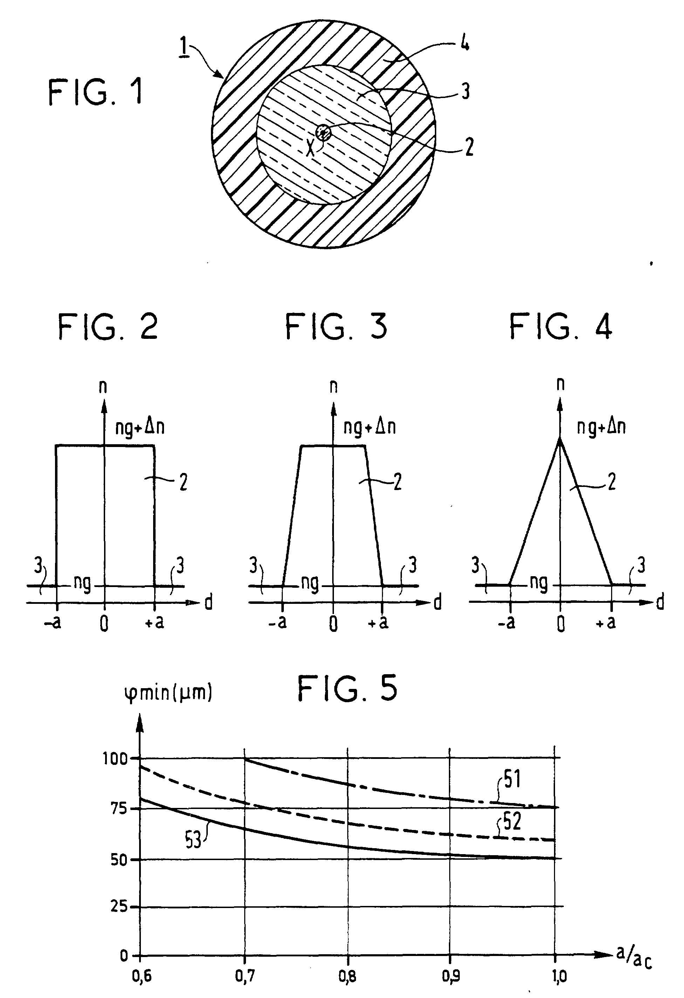

On voit ainsi sur la figure 1 une fibre optique 1 selon l'invention comprenant un coeur optique 2 en un matériau à base de silice par exemple dopée au germanium pour accroître son indice de réfraction par rapport à celui de la silice pure, en position centrale le long de l'axe longitudinal X de la fibre 1, entouré d'une gaine optique 3, en silice sensiblement pure, c'est-à-dire dont l'indice de réfraction est égal à celui de la silice pure ou inférieur à ce dernier de $10^{-3}$ au plus (l'indice de la gaine optique 3 peut varier entre la périphérie du coeur 2 et l'extérieur de la fibre 1, tout en restant inférieur à celui du coeur 2). La gaine optique 3 est entourée d'un revêtement de protection 4 en un matériau plastique, comme par exemple une résine.

La figure 2 illustre le profil d'indice de la fibre de la figure 1, c'est-à-dire qu'elle montre, en fonction de la distance d à l'axe X de la fibre optique, les variations de l'indice de réfraction n dans le coeur 2 et dans la gaine optique 3 de la fibre optique 1 au sein d'une section transversale de la fibre 1. Le profil illustré en figure 2 est dit du type à échelon : l'indice maximal du coeur 2 étant noté $n_g + \Delta$n, l'indice du coeur 2 varie entre $n_g$ et $n_g + \Delta$n de manière à donner à la courbe une forme de rectangle ; la gaine 3 a un indice $n_g$ sensiblement constant. Ainsi que rappelé plus haut, l'indice $n_g$, de manière classique, est voisin de celui de la silice pure, de sorte qu'il présente une différence en moins par rapport à ce dernier (égal à 1,444) au plus égale à 0,001.

On a illustré aux figures 3 et 4 deux autres types de profils pouvant être ceux de la fibre 1, respectivement les profils de type trapèze (l'indice du coeur 2 varie entre $n_g$ et $n_g + \Delta$n de manière à donner à la courbe une forme de trapèze, et la gaine 3 a un indice $n_g$ sensiblement constant) et de type triangle (l'indice du coeur 2 varie entre $n_g$ et $n_g + \Delta$n de manière à donner à la courbe une forme de triangle, et la gaine 3 a un indice $n_g$ sensiblement constant).

Pour généraliser, les profils de type triangle et de type échelon sont considérés, dans le cadre de la rpésente invention, comme des cas particuliers d'un profil de type trapèze dans lequel le rapport entre la petite base et la grande base est respectivement égal à 1 ou à 0.

Selon l'invention, on peut choisir le diamètre extérieur $\varphi$ (en $\mu$m) de la gaine optique de sorte que $\varphi \in$ [$\varphi_{min}$ ; 100], $\varphi_{min}$ étant donné, en $\mu$m, par la formule :

$$\varphi_{min} = 125\, x \left( \frac{10^{-12}}{2,4\, n_g k^2} \right)^{\frac{1}{8}} \frac{\left[ V\left( 0,5862 + 1,8364\, V^{-\frac{3}{2}} + 3,7127\, V^{-6} \right) \right]^{\frac{1}{4}}}{(1,1428 - 0,996\, V^{-1})\Delta n^{\frac{5}{8}}},$$

où :

$$k = 2\pi/\lambda$$

$$V = \frac{2\pi a}{\lambda}\ \sqrt{2n_g\Delta n}$$

$\lambda$ (en $\mu$m) étant la longueur d'onde de la transmission (1,3 ou 1,55 $\mu$m), et a le rayon du coeur de la fibre optique.

Lorsque, selon l'invention, $\varphi$ est choisi dans l'intervalle [$\varphi_{min}$, 100], c'est-à-dire de manière à réduire les pertes par courbures et microcourbures, $\Delta$n étant choisi supérieur à 0,01 et a (en $\mu$m) dans l'intervalle [0,6$a_c$ ; 1,1$a_c$] ($a_c$ étant donné, en $\mu$m, par la formule :

$$a_c = \frac{2,405}{k}\ x\ \frac{1}{\sqrt{2n_g\Delta n}},$$

pour maintenir au sein de la fibre optique une atténuation inférieure à 0,4 dB/km et conserver une longueur d'onde de coupure strictement inférieure à la longueur d'onde de la transmission (1,3 ou 1,55 $\mu$m), on peut ramener le diamètre de la gaine optique largement en-dessous de 125 $\mu$m (valeur classique pour les fibres monomodes standards), ce qui permet de réaliser des économies non négligeables dans le coût de fabrication des fibres optiques, ainsi que d'accroître la capacité des câbles optiques.

Par exemple, lorsque $\varphi$ est choisi égal à 100 $\mu$m, toutes choses égales par ailleurs au cas d'une fibre optique monomode standard, la réduction d'encombrement de la fibre optique obtenue est voisine de 33% ; lorsque $\varphi$ est choisi égal à 80 $\mu$m, toutes choses égales par ailleurs au cas d'une fibre optique monomode standard, la réduction d'encombrement de la fibre optique obtenue est voisine de 60%. En première approximation, la réduction du coût de fabrication de la fibre est sensiblement égale à la réduction de section, c'est-à-dire à la réduction de l'encombrement.

On a représenté en figure 5, pour une fibre monomode destinée à fonctionner à 1,55 $\mu$m, plusieurs courbes donnant le diamètre minimal de la gaine optique $\varphi_{min}$ pour différentes valeurs du rapport $a/a_c$, et ce pour plusieurs valeurs de $\Delta$n.

La courbe 51 correspond au cas où $\Delta$n est égal à 0,01 ; on voit que $\varphi_{min}$ peut être choisi entre 75 $\mu$m et 100 $\mu$m, en fonction de $a/a_c$.

La courbe 52 correspond au cas où $\Delta$n est égal à 0,015 ; on voit que $\varphi_{min}$ peut être choisi entre 62,5 $\mu$m et 100 $\mu$m, en fonction de $a/a_c$.

La courbe 53 correspond au cas où $\Delta$n est égal à 0,02 ; on voit que $\varphi_{min}$ peut être choisi entre 50 $\mu$m et 75 $\mu$m, en fonction de $a/a_c$.

Les critères selon l'invention sur a, $\Delta$n et $\varphi$ s'appliquent de manière générale pour toutes les fibres optiques ayant un profil de type trapèze (y compris les fibres optiques ayant un profil de type triangle ou échelon).

Pour ce qui est du revêtement synthétique de protection 4, son épaisseur est de l'ordre de 50 $\mu$m.

On donne ci-après quelques exemples précis de structures de fibres optiques conformes à la présente invention. Les exemples 1 à 8 concernent des fibres destinées à fonctionner à 1,55 $\mu$m, et les exemples 9 à 11 concernent des fibres destinées à fonctionner à 1,3 $\mu$m.

Dans tous ces exemples, l'épaisseur du revêtement 4 est de 50 $\mu$m.

Toutes les fibres obtenues selon l'invention et présentant les caractéristiques indiquées dans les exemples qui suivent ont une atténuation inférieure à 0,4 dB/km et une sensibilité aux microcourbures au moins comparable à celle d'une fibre standard dont le diamètre de la gaine optique est de 125 $\mu$m, le diamètre de coeur compris entre 8 et 10 $\mu$m et l'épaisseur du revêtement de protection égale à 50 $\mu$m.

### Exemple 1

Dans cet exemple, une fibre optique selon l'invention à profil de type échelon a les caractéristiques suivantes (à 1,55 $\mu$m) :

$\Delta$n=0,01
a = 2,43 $\mu$m
$\varphi$ = 100 $\mu$m.

### Exemple 2

Dans cet exemple, une fibre optique selon l'invention à profil de type échelon a les caractéristiques suivantes (à 1,55 µm) :

      $\Delta n = 0,01$
      $a = 2,60$ µm
      $\varphi = 90$ µm.

### Exemple 3

Dans cet exemple, une fibre optique selon l'invention à profil de type échelon a les caractéristiques suivantes (à 1,55 µm) :

      $\Delta n = 0,015$
      $a = 1,7$ µm
      $\varphi = 100$ µm.

### Exemple 4

Dans cet exemple, une fibre optique selon l'invention à profil de type échelon a les caractéristiques suivantes (à 1,55 µm):

      $\Delta n = 0,015$
      $a = 1,98$ µm
      $\varphi = 80$ µm.

### Exemple 5

Dans cet exemple, une fibre optique selon l'invention à profil de type échelon a les caractéristiques suivantes (à 1,55 µm):

      $\Delta n = 0,015$
      $a = 2,26$ µm
      $\varphi = 70$ µm.

### Exemple 6

Dans cet exemple, une fibre optique selon l'invention à profil de type échelon a les caractéristiques suivantes (à 1,55 µm) :

      $\Delta n = 0,02$
      $a = 1,47$ µm
      $\varphi = 80$ µm.

### Exemple 7

Dans cet exemple, une fibre optique selon l'invention à profil de type échelon a les caractéristiques suivantes (à 1,55 µm) :

      $\Delta n = 0,02$
      $a = 1,67$ µm
      $\varphi = 70$ µm.

### Exemple 8

Dans cet exemple, une fibre optique selon l'invention à profil de type échelon a les caractéristiques suivantes (à 1,55 µm) :

      $\Delta n = 0,02$.
      $a = 1,96$ µm

$\varphi$ = 60 $\mu$m.

### Exemple 9

Dans cet exemple, une fibre optique selon l'invention à profil de type échelon a les caractéristiques suivantes (à 1,3 $\mu$m) :

$\Delta$n = 0,01
a = 2,038 $\mu$m
$\varphi$ = 96 $\mu$m.

### Exemple 10

Dans cet exemple, une fibre optique selon l'invention à profil de type échelon a les caractéristiques suivantes (à 1,3 $\mu$m) :

$\Delta$n = 0,015
a = 1,426 $\mu$m
$\varphi$ = 96 $\mu$m.

### Exemple 11

Dans cet exemple, une fibre optique selon l'invention à profil de type échelon a les caractéristiques suivantes (à 1,3 $\mu$m) :

$\Delta$n = 0,02
a = 1,644 $\mu$m
$\varphi$ = 57,5 $\mu$m.

Bien évidemment, la présente invention n'est pas limitée aux modes de réalisation qui viennent d'être décrits.
En particulier, le revêtement de protection en un matériau synthétique peut être constitué d'une ou de plusieurs couches, et son épaisseur n'est pas nécessairement voisine de 50 $\mu$m ; cette épaisseur est choisie en fonction des propriétés mécaniques recherchées pour la fibre optique, ainsi que de sa sensibilité aux courbures et microcourbures.
Par ailleurs, l'invention s'applique également à des fibres optiques dont le profil est de type trapèze ou triangle. Les paramètres de référence (a, $\Delta$n et $\varphi$) d'une fibre de ce type peuvent être transposés par calcul aux paramètres de référence d'une fibre à profil de type échelon, et vice-versa, car il existe, de façon connue, une relation d'équivalence entre ces paramètres. On dit dans ce cas que le profil de type échelon est équivalent à un profil de type triangle ou trapèze. Ainsi, les exemples de profils donnés précédemment peuvent être transposés de manière simple, moyennant l'utilisation de cette relation d'équivalence, à des profils de type triangle ou trapèze, c'est-à-dire que l'on peut en déduire de manière directe les paramètres de référence des profils de type triangle ou trapèze.

**Revendications**

**1.** Fibre optique monomode comprenant un coeur optique pour le guidage de la majorité des ondes lumineuses, entouré d'une gaine optique, la différence entre l'indice de réfraction maximal dudit coeur et celui de ladite gaine optique étant notée $\Delta$n, où $\Delta$n est supérieur ou égal à 0,01, et le rayon dudit coeur étant noté a, **caractérisée en ce que**

- a $\in$ [0,6a$_c$ ; 1,1a$_c$], a$_c$ étant donné, en $\mu$m, par la formule :

$$a_c = \frac{2,405}{k} \; x \; \frac{1}{\sqrt{2n_g \Delta n}},$$

où k = $2\pi/\lambda$, $\lambda$ étant (en $\mu$m) la longueur d'onde de la transmission, et où n$_g$ est l'indice de ladite gaine optique, égal à $10^{-3}$ près à celui de la silice pure,

et **en ce que**, φ étant le diamètre de ladite gaine optique, en μm : φ ∈ [φ$_{min}$ ; 100], φ$_{min}$ étant donné, en um. par la formule :

$$\varphi_{min} = 125\,x \left(\frac{10^{-12}}{2,4n_g k^2}\right)^{\frac{1}{8}} \frac{\left[V\left(0,5862 + 1,8364V^{-\frac{3}{2}} + 3,7127V^{-6}\right)\right]^{\frac{1}{4}}}{(1,1428 - 0,996V^{-1})\Delta n^{\frac{5}{8}}}$$

où :

$$V = \frac{2\pi a}{\lambda}\sqrt{2n_g\Delta n}.$$

**2.** Fibre selon la revendication 1 **caractérisée en ce qu'**elle présente un profil d'indice de réfraction de type échelon, trapèze ou triangle.

**3.** Fibre selon l'une des revendications 1 ou 2 **caractérisée en ce que** ladite gaine optique est entourée d'un revêtement de protection en un matériau synthétique.

**4.** Fibre optique selon la revendication 3 **caractérisée en ce que** ledit revêtement de protection a une épaisseur voisine de 50 μm.

**Claims**

**1.** A monomode optical fiber comprising an optical core for guiding the majority of the lightwaves, surrounded by cladding, the difference between the maximum refractive index of said core and that of said cladding being referenced $\Delta n$, where $\Delta n$ is not less than 0.01, and the radius of said core being referenced $\underline{a}$, the fiber being **characterized in that**:
$a \in [0,6a_c, 1.1a_c]$, $a_c$ being given, in μm, by the formula:

$$a_c = \frac{2,405}{k} \times \frac{1}{\sqrt{2n_g\Delta n}},$$

where $k = 2\pi/\lambda$, $\lambda$ (in μm) being the transmission wavelength, and where ng is the index of said cladding, equal within $10^{-3}$ to that of pure silica,
and **in that**, φ being the diameter of said cladding, in μm: φ ∈ [φ$_{min}$, 100], φ$_{min}$ being given, in μm, by the formula:

$$\varphi_{min} = 125 \times \left(\frac{10^{-12}}{2.4n_g k^2}\right)^{\frac{1}{8}} \frac{\left[V\left(0.5862 + 1.8364V^{-\frac{3}{2}} + 3.7127V^{-6}\right)\right]^{\frac{1}{4}}}{\left(1.1428 - 0.996V^{-1}\right)\Delta n^{\frac{5}{8}}}$$

where

$$V = \frac{2\pi a}{\lambda}\sqrt{2n_g\Delta n}.$$

**2.** A fiber according to claim 1, **characterized in that** it presents a step, trapezium or triangle-type refractive-index profile.

**3.** A fiber according to claim 1 or claim 2, **characterized in that** said cladding is surrounded by a protective coating made of a synthetic material.

**4.** An optical fiber according to claim 3, **characterized in that** said protective coating has a thickness of about 50 μm.

**Patentansprüche**

**1.** Monomodaler Lichtwellenleiter, der einen lichtleitenden Kern zur Lenkung der Mehrheit von Lichtwellen enthält, der von einer lichtleitenden Umhüllung umgeben ist, wobei der Unterschied zwischen dem maximalen Brechungsindex des lichtleitenden Kerns und demjenigen der lichtleitenden Umhüllung mit Δn angegeben ist, wobei Δn größer oder gleich 0,01 ist, und der Radius des Kerns mit a angegeben ist, **dadurch gekennzeichnet, daß:**

- $a \in [0,6a_c; 1,1a_c]$ ist, wobei a in μm durch die Formel:

$$a_c = \frac{2,405}{k} \times \frac{1}{\sqrt{2n_g\Delta n}},$$

angegeben ist, worin $k = 2\pi/\lambda$ ist; wobei λ (in μm) die Länge der übertragenen Welle ist; und wobei ng der Brechungsindex der lichtleitenden Umhüllung ist, $10^{-3}$ entspricht und demjenigen von reinem Siliciumdioxid nahe kommt,

und dadurch, daß φ der Durchmesser der lichtleitenden Umhüllung in μm: $\varphi \in [\varphi_{min}; 100]$ ist, wobei $\varphi_{min}$ in μm durch die Formel:

$$\varphi_{min} = 125 \times \left(\frac{10^{-12}}{2,4n_g k^2}\right)^{\frac{1}{8}} \frac{\left[V\left(0,5862 + 1,8364V^{-\frac{3}{2}} + 3,7127V^{-6}\right)\right]^{\frac{1}{4}}}{(1,1428 - 0,996V^{-1})\Delta n^{\frac{5}{8}}}$$

wobei:

$$V = \frac{2\pi a}{\lambda}\sqrt{2n_g\Delta n}$$

angegeben ist.

**2.** Faser nach Anspruch 1, **dadurch gekennzeichnet, daß** sie ein Brechungsindexprofil vom Echelon-, Trapez- oder Dreiecks-Typ aufweist.

**3.** Faser nach einem der Ansprüche 1 oder 2, **dadurch gekennzeichnet, daß** die lichtleitende Umhüllung von einem Schutzüberzug aus einem synthetischen Material umgeben ist.

**4.** Lichtwellenleiter nach Anspruch 3, **dadurch gekennzeichnet, daß** der Schutzüberzug eine Dicke von ca. 50 μm aufweist.

# FIG. 1

# FIG. 2     FIG. 3     FIG. 4

# FIG. 5